# EUROPEAN PATENT APPLICATION

(11) **EP 1 626 578 A2**
(43) Date of publication of application: **15.02.2006**
(21) Application number: 05017596.7
(22) Date of filing: 12.08.2005
(51) Int. Cl.: H04N 7/088, H04N 5/445

(54) **DTV data stream, DTV broadcast system, and methods of generating and processing DTV data stream**

(30) Priority: 13.08.2004 KR 2004063907
(71) Applicant: LG Electronics, Inc., Seoul (KR)
(72) Inventor: Ahn, Kyu Tae, Bundang-gu,Seongnam-si, Gyeonggi-do (KR); Keum, Jeong Hyun, Gwanak-gu, Seoul (KR)
(74) Representative: Zech, Stefan Markus

(57) **Abstract**

A digital television (DTV) data stream contains a plurality of subtitle streams having different subtitle sizes and a program map table (PMT) associated with the subtitle streams. The PMT includes a subtitle scale information descriptor which includes a plurality of subtitle scale information sets specifying the subtitle sizes of the subtitle streams, respectively. The subtitle scale information descriptor is included in a second descriptor loop of the PMT, and each subtitle scale information descriptor includes a language code identifying a language of a corresponding subtitle stream, and scale information representing a ratio of a subtitle size of the subtitle stream to a reference subtitle size.

## Description

This application claims the benefit of Korean Patent Application No. 10-2004-0063907, filed on August 13, 2004, which is hereby incorporated by reference as if fully set forth herein.

### BACKGROUND OF THE INVENTION

### Field of the Invention

The present invention relates to a digital receiver, and more particularly, to a digital television (DTV) data stream, a DTV broadcast system, and methods of generating and processing a DTV data stream.

### Discussion of the Related Art

Generally, a digital broadcast receiver such as a digital TV (DTV) provides a user with high-quality graphic video and high-quality audio as compared to the conventional analog TV. The digital TV has an advantage in that it receives a variety of programs provided from a wider range of channels than those of the analog TV, and can provide the user with the received programs.

The above-mentioned digital TV has a variety of additional services. One of the most typical additional services is a subtitle function. The subtitle is indicative of a service for providing a user or TV viewer with caption data, graphic letters (also called picture letters), and icons, etc., and is similar to a caption function of the analog TV. The subtitle and the caption data are collectively referred to as a caption.

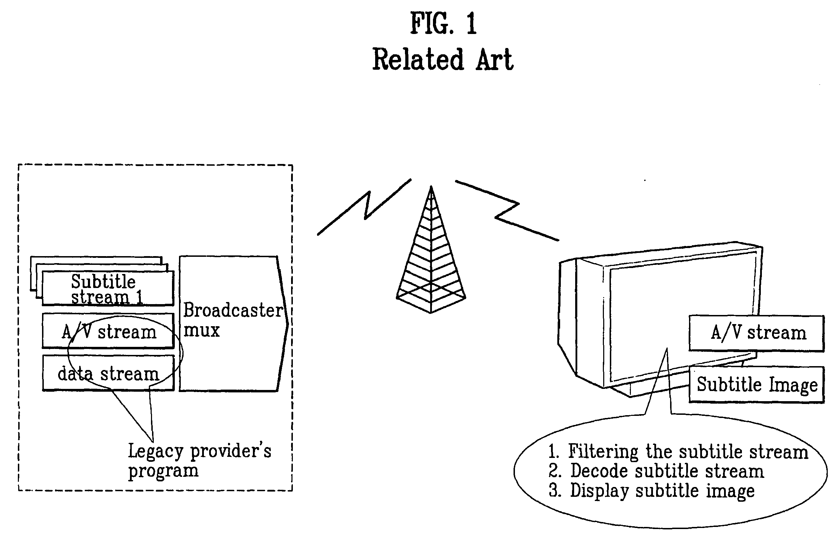

FIG. 1 shows a subtitle transmitted from a broadcast station to a digital broadcast receiver, and an example of subtitle display.

Referring to FIG. 1, a broadcast station configures a subtitle stream, multiplexes broadcast signals (i.e., a video signal and an audio signal) to be displayed, and transmits the multiplexed broadcast signals. Subtitle-associated information is transmitted via a Program Map Table (PMT) of Service Information (SI). In more detail, the presence or absence of the subtitle information is transmitted via the PMT.

Generally, a digital broadcast provides users or subscribers with channel-associated information and program information of individual channels.

The SI includes a Program Association Table (PAT) and the PMT. The above-mentioned tables include a basic unit, combine one or more sections with each other, and configure a single table.

The PAT describes constituent components for every program number, and indicates a PID of a transport packet for transmitting the PMT. The PMT includes a program identification (ID) number, PID information of the transport packet via which individual bit streams of audio and video data contained in a program are transmitted, and other packet identification (PID) information (Audio/Video/Program Clock Reference packet identification (A/V/PCR PID)) through which the PCR information is transmitted.

A digital broadcast receiver separates a subtitle stream from a transmission stream multiplexed with video and audio signals, decodes the subtitle stream, and displays the decoded subtitle stream. In other words, the digital broadcast receiver filters only the subtitle stream from among the transmission stream, decodes the subtitle stream, and displays the decoded subtitle stream (i.e., a subtitle image) at a predetermined position on a screen in the form of an On Screen Display (OSD).

FIG. 2 shows an example of a PMT syntax for transmitting the presence or absence of subtitle information. Referring to FIG. 2, the PMT syntax includes a subtitle descriptor (subtitling_descriptor()) indicating the presence of the subtitle.

The subtitle descriptor (subtitling_descriptor()) represents a second descriptor loop and is a descriptor indicating subtitle type information and so on.

FIG. 3 shows an exemplary syntax of the subtitle descriptor (subtitling_descriptor()). Referring to FIG. 3, a first field (ISO_639_languauage_code), a second field (subtitling_type), a third field (composition_page_id), and a fourth field (ancillary_page_id) are assigned to a repetition statement composed of a "FOR" loop.

The first field (ISO_639_languauage_code) includes three language codes from among subtitle languages. The second field (subtitling_type) is indicative of content information of the subtitle.

The digital broadcast receiver parses a PMT syntax of the SI (Service Information). In this case, if the subtitle and the subtitle descriptor (subtitling_descriptor()) are included in the parsed PMT syntax, the digital broadcast receiver performs a packetized elementary stream (PES) filtering action of the subtitle using a parsing result value (i.e., elementary stream PID (ES_PID)) of an elementary stream information (ESinfo) field. The PES of the filtered subtitle is decoded by a subtitle decoder, and the decoded result is displayed at a predetermined screen location.

However, the size of conventional subtitle information is fixed to only one size, such that the fixed-sized subtitle information is transmitted. Therefore, a user cannot change a subtitle size even when the displayed subtitle (e.g., a character) has a very large size or a very small size. Thus, the user must view an original subtitle without changing the subtitle size, thereby resulting in a greater inconvenience to the user.

### SUMMARY OF THE INVENTION

Accordingly, the present invention is directed to a digital television (DTV) data stream, a DTV broadcast system, and methods of generating and processing a DTV data stream that substantially obviate one or more problems due to limitations and disadvantages of the related art.

An object of the present invention is to provide a digital television (DTV) data stream, a DTV broadcast system, and methods of generating and processing a DTV data stream that can change the size of a subtitle that is to be displayed.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, a digital television (DTV) data stream containing a plurality of subtitle streams having different subtitle sizes and a program map table (PMT) associated with the subtitle streams, wherein the PMT includes a subtitle scale information descriptor, which includes a plurality of subtitle scale information sets specifying the subtitle sizes of the subtitle streams, respectively. Herein, each subtitle scale information descriptor may include a language code identifying a language of a corresponding subtitle stream, and scale information representing a ratio of a subtitle size of the corresponding subtitle stream to a reference subtitle size. The scale information may include numerator and denominator values representing the size ratio.

In another aspect of the present invention, a digital broadcast system includes a broadcast transmitter generating a digital television (DTV) data stream, the DTV data stream containing a plurality of subtitle streams having different subtitle sizes and a program map table (PMT) associated with the subtitle streams, the PMT comprising a subtitle scale information descriptor which includes a plurality of subtitle scale information sets specifying a plurality of subtitle sizes of the subtitle streams, respectively, and a DTV receiver parsing the subtitle scale information descriptor and displaying a menu which indicates the subtitle sizes specified in the subtitle scale information descriptor.

In another aspect of the present invention, a method of generating a digital television (DTV) data stream includes generating a plurality of subtitle streams having different subtitle sizes, and generating a program map table (PMT) associated with the subtitle streams, the PMT comprising a subtitle scale information descriptor which includes a plurality of subtitle scale information sets specifying a plurality of subtitle sizes of the subtitle streams, respectively.

In a further aspect of the present invention, a method of processing a digital television (DTV) data stream in a DTV receiver includes receiving a DTV data stream containing a plurality of subtitle streams having different subtitle sizes and a program map table (PMT) associated with the subtitle streams, and parsing the PMT from the DTV data stream, the parsed PMT comprising a subtitle scale information descriptor which includes a plurality of subtitle scale information sets specifying the subtitle sizes of the subtitle streams.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

FIG. 1 is a conceptual diagram illustrating a conventional digital broadcast transmitter/receiver unit for a subtitle;

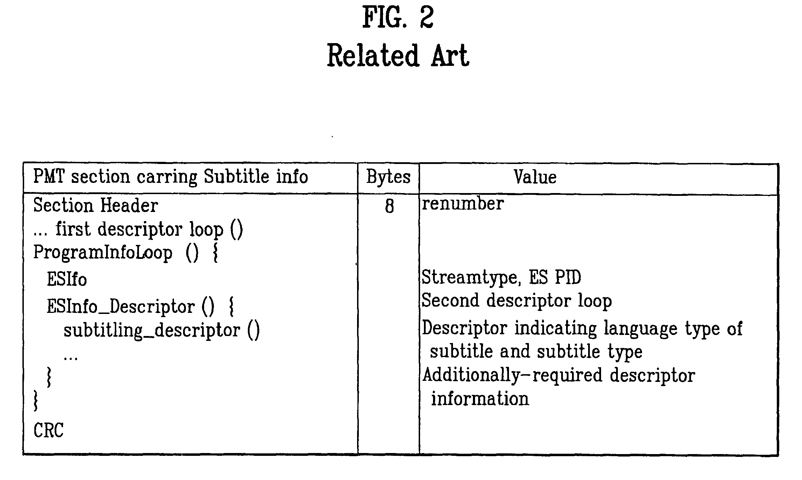

FIG. 2 shows an example of a conventional PMT syntax structure including a general subtitle descriptor (subtitling_descriptor());

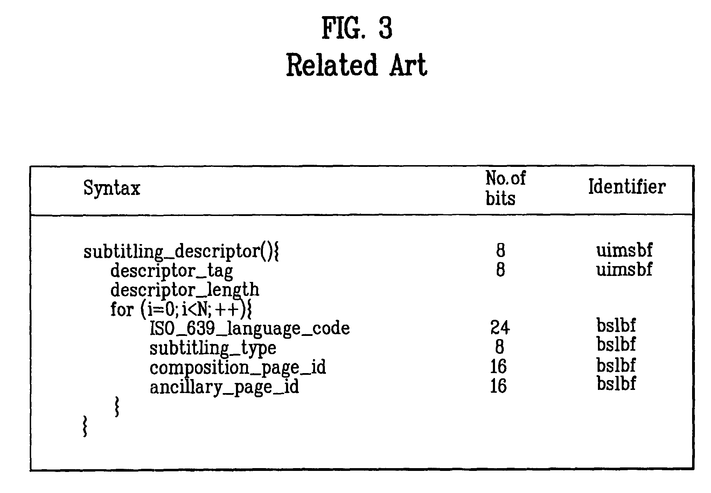

FIG. 3 shows an example of a conventional syntax structure of the subtitle descriptor (subtitling_descriptor()) shown in FIG. 2;

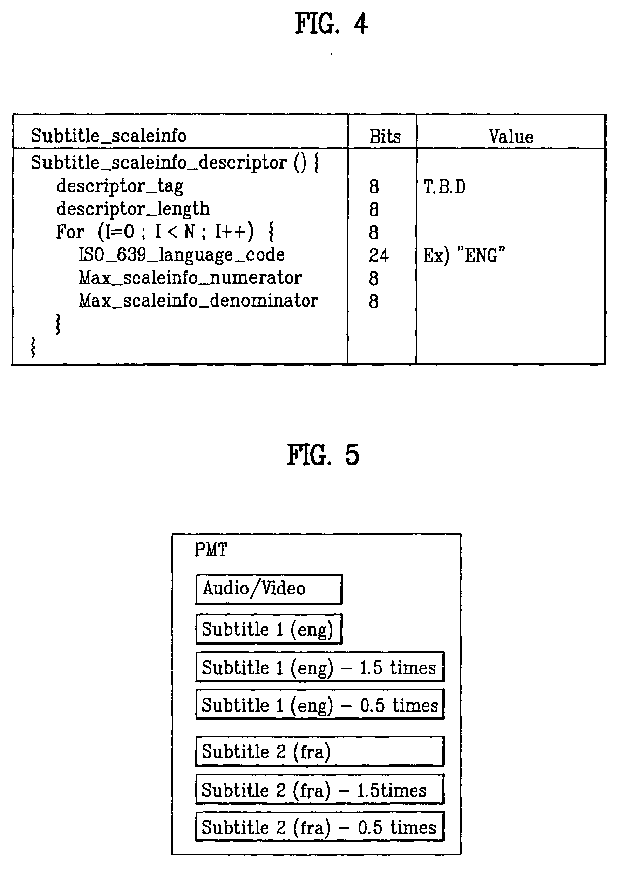

FIG. 4 shows an example of a syntax structure of the subtitle descriptor (subtitling_descriptor()) according to the present invention;

FIG. 5 shows an example of a subtitle including language information and size information according to the present invention; and

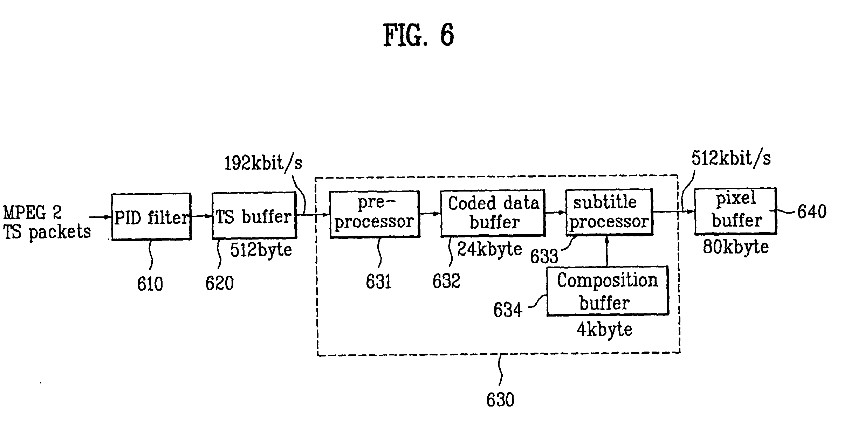

FIG. 6 is a block diagram illustrating a subtitle decoding device according to an embodiment of the present invention.

### DETAILED DESCRIPTION OF THE INVENTION

Reference will now be made in detail to the preferred embodiments of the present invention, examples of which are illustrated in the accompanying drawings. Wherever possible, the same reference numbers will be used throughout the drawings to refer to the same or like parts.

It should be noted that the present invention aims to allow a digital broadcast receiver to change or vary the size of a displayed subtitle by extending a PMT syntax.

Particularly, the present invention generates subtitle streams of various sizes, multiplexes the generated subtitle streams with actual broadcast signals, and transmits the multiplexed result. The present invention newly defines a descriptor (subtitle_scaleinfo), and transmits the above-mentioned multiple-sized subtitle-associated information via the descriptor (subtitle_scaleinfo).

For simplicity of the description and better understanding of the present invention, the above-mentioned descriptor (subtitle_scaleinfo) in a second descriptor loop included in a PMT will be given as an example of the present invention.

FIG. 4 shows an example of the descriptor (subtitle_scaleinfo) according to the present invention. In more detail, only the parts associated with the subtitle size are shown in FIG. 4.

In other words, the descriptor (subtitle_scaleinfo) includes an ISO_639_language_code field, a max_scaleinfo _numerator field, and a max_scaleinfo_denominator field.

The ISO_639_language_code field is assigned 24 bits, and identifies a language of a corresponding subtitle stream. In this case, the ISO_639_language_code field is adapted to establish (or define) the link between the descriptor (subtitling descriptor()).

The max_scaleinfo_numerator field indicates a maximum numerator size of the subtitle and is assigned with 8 bits. The max scaleinfo denominator field indicates a maximum denominator size of the subtitle and is assigned with 8 bits. The scale information represents a ratio of a subtitle size of the corresponding subtitle stream to a reference subtitle size. Herein, the scale information includes numerator and denominator values representing the size ratio. For example, provided that an English subtitle stream is generated to have 0.5 times a reference size (or general size) or 1.5 times the reference size, and is then transmitted to a predetermined target, the max_scaleinfo _numerator field and the the max_scaleinfo_denominator field indicate 0x01/0x01, 0x01/0x10, and 0x11/0x10, on the condition that the ISO_639_language_code field included in the descriptor (subtitle_scaleinfo descriptor()) represents English. In this case, individual field values can be changed by a standard designer or a system designer, such that they are not limited to the above-mentioned preferred embodiment and can be modified as required.

In other words, the descriptor (subtitle_scaleinfo) can be provided in the following forms. For example, if the descriptor (subtitle_scaleinfo) has the same language as the ISO_639_language_code defined by the subtitle descriptor (subtitling_descriptor()), the subtitle descriptor (subtitle_scaleinfo) can be selectively provided in a corresponding subtitle.

The size of a subtitle basically transmitted by a user who refers to the descriptor information (subtitle_scaleinfo) is determined to be 1.5 times a reference size (i.e., Max_scaleinfo_numerator=0x11 and Max_scaleinfo_denomiator=0x10), or is determined to be 0.5 times the reference size (i.e., Max_scaleinfo_numerator=0x01 and Max_scaleinfo_denomiator=0x10), and the multiple-sized subtitle is transmitted via a corresponding PID of the elementary stream PID (ES_PID).

The above-mentioned example is shown in FIG. 5. In association with English (eng), three subtitle size information sets (i.e., a reference size, 1.5 times the reference size, and 0.5 times the reference size) are defined in the subtitle descriptor (subtitle_scaleinfo descriptor()). In association with French (fra), three subtitle size information sets (i.e., a reference size, 1.5 times the reference size, and 0.5 times the reference size) are defined in the subtitle descriptor (subtitle_scaleinfo descriptor()).

The digital broadcast receiver includes a plurality of menus capable of selecting a variety of subtitle sizes associated with a specific language. For example, it is assumed that a reference size, 1.5 times the reference size, and 0.5 times the reference size in association with a specific language are defined in the subtitle descriptor (subtitle_scaleinfo) included in the PMT syntax.

Therefore, the digital broadcast receiver must display a first menu indicating the reference size, a second menu indicating 1.5 times the reference size, and a third menu indicating 0.5 times the reference size in association with a subtitle corresponding to the same language, and must allow the user to select one of the first to third menus. For example, provided that a broadcast station generates a subtitle stream as shown in FIG. 5, and transmits information corresponding to the subtitle stream via the subtitle descriptor (subtitle_scaleinfo descriptor) included in the PMT syntax, a menu screen of the digital broadcast receiver can also be created as shown in FIG. 5.

In this case, if a reference size subtitle is set to be a default subtitle, and no user selection signal is present, the reference size subtitle acting as the default subtitle is parsed and displayed according to a preferred embodiment of the present invention. In this case, the number of menu items and titles of individual menu items can be determined by a standard designer or system designer, such that they are not limited to the above-mentioned preferred embodiment of the present invention.

For example, according to the above-mentioned digital broadcast receiver, if the user selects English as a predetermined program subtitle via the menu screen, and selects the size of the subtitle as a specific menu indicating 1.5 times the reference size, a subtitle decoder parses the subtitle descriptor (subtitle_scaleinfo) included in the PMT syntax of a corresponding program, and acquires a subtitle PID in which the ISO_639_language_code field indicates English, the max_scaleinfo_numerator field indicates a predetermined value of 0x11, and the max_scaleinfo_denomicator indicates a predetermined value of 0x10. In this case, the broadcast station must determine the language of the corresponding program to be in English, and must transmit a subtitle having a predetermined size equal to 1.5 times the reference size via a corresponding PID of the ES_PID.

The digital broadcast receiver filters only a substream designated by the subtitle PID from among the transmitted subtitle streams, and displays the filtered substream at a predetermined position on a screen. Therefore, the subtitle, which is displayed in English and has the size equal to 1.5 times the reference size, is displayed on the screen.

FIG. 6 is a block diagram illustrating a digital broadcast receiver for receiving/decoding a subtitle according to the present invention. Referring to FIG. 6, the digital broadcast receiver includes a PID filter 610, a transport (TS) buffer 620, a subtitle decoder 630, and a pixel buffer 640. For example, it is assumed that the user has set the language to English and has set the subtitle size to 1.5 times a reference size.

In other words, if an MPEG-2 transport packet is received in the digital broadcast receiver shown in FIG. 6, the PID filter 610 filters only a subtitle stream packet corresponding to both user-selected specific language and user-selected specific size based on a subtitle PID acquired by parsing the subtitle descriptor (subtitle_scaleinfo) included in the PMT, such that the filtering result is temporarily stored in the TS buffer 620. For example, the TS buffer 620 has a size of 512 bytes, and outputs subtitle stream packet data to the subtitle decoder 630 in 192 Kbyte units. The subtitle decoder 630 includes a pre-processor 631, a coded data buffer 632, a subtitle processor 633, and a composition buffer 634.

The pre-processor 631 removes a header of the subtitle stream packet and a header of a subtitle PES packet, receives only segments required by the selected subtitle service from the subtitle stream, filters the received segments, and outputs the filtering result to the subtitle processor 633 via the data buffer 632 having a predetermined size of 24 Kbytes. In other words, the subtitle segment stream is filtered by a field value (page_id) of the subtitle descriptor (subtitling_descriptor()) included in the PMT. In this case, a Presentation Time Stamp (PTS) value is bypassed to the subtitle processor 633 via the data buffer 633. Provided that a single segment represents pixel data, the subtitle processor 633 does not retrieve a segment from the data buffer 632 until all pixels are transmitted to the pixel buffer 640. A transfer rate of pixel data transmitted to the pixel buffer 640 is determined to be 512 kbit/s. The subtitle data stored in the pixel buffer 640 is multiplexed with actual broadcast signals, such that the multiplexed result is displayed on a TV screen.

In other words, if the above-mentioned operations are performed, subtitle data having user-selected language and user-selected size is displayed on a display screen.

The subtitle descriptor (subtitle_scaleinfo descriptor()) is a predetermined set of information indicating a maximum size of a subtitle to be displayed on the TV screen.

Provided that the broadcast station generates a subtitle of a specific language such as English (eng), and the English (eng) subtitle is transmitted to a target, a first subtitle having a predetermined size equal to 1.5 times the English (eng) subtitle, and a second subtitle having a predetermined size equal to 0.5 times the English (eng) subtitle are generated and transmitted to the target. In this case, the digital broadcast receiver controls the subtitle decoder to selectively filter the subtitle according to both user-selected data (i.e., preference) and subtitle-size display setup data determined via a predetermined menu screen.

Therefore, provided that a subtitle has a very large size in association with a single program such that it covers a desired screen image, a user who is not satisfied with the large-sized subtitle can reduce the subtitle to a smaller size, as desired, such that the user can view the small-sized subtitle on a screen. Hearing-impaired users or visually-impaired users can extend the size of the subtitle contents, in order to easily recognize the subtitle contents.

In this way, the present invention allows individual users to freely select the size of a subtitle that is to be displayed.

It should be noted that most of the terminologies disclosed in the present invention are defined in consideration of the functions of the present invention, and can be differently determined according to intention of those skilled in the art or usual practices. Therefore, it is preferable that the above-mentioned terminology be understood on the basis of all contents disclosed in the present invention.

The present invention has been disclosed in the above-mentioned preferred embodiment, such that those skilled in the art may easily modify the above-mentioned preferred embodiment according to technical scope and difficulty of the present invention. Therefore, it should be understood that other preferred embodiments and modification based on technical contents of the present invention belong to the scope of the appended claims of the present invention.

As apparent from the above description, a digital television (DTV) data stream, a DTV broadcast system, and methods of generating and processing a DTV data stream according to the present invention extend SI information to change the size of a subtitle that is to be displayed, such that individual users can allow a subtitle composed of the same language to be displayed in various sizes, thereby facilitating the viewing of the users. Particularly, if a broadcast station generates multiple-sized subtitles (e.g., a basic-sized subtitle, a small-sized subtitle, and a large-sized subtitle) and transmits the multiple-sized subtitles to a target along with the subtitle size information, a user of a reception end selects one of the above-mentioned multiple-sized subtitles, and views the selected subtitle through the screen. Thus, a variety of requests made by individual users (e.g., general viewers or impaired viewers) can be effectively satisfied.

It will be apparent to those skilled in the art that various modifications and variations can be made in the present invention without departing from the spirit or scope of the inventions. Thus, it is intended that the present invention covers the modifications and variations of this invention provided they come within the scope of the appended claims and their equivalents.

## Claims

1. A digital television (DTV) data stream containing a plurality of subtitle streams having different subtitle sizes and a program map table (PMT) associated with the subtitle streams, the PMT comprising a subtitle scale information descriptor which includes a plurality of subtitle scale information sets specifying the subtitle sizes of the subtitle streams, respectively.

2. The DTV data stream of claim 1, wherein the subtitle scale information descriptor is included in a second descriptor loop of the PMT.

3. The DTV stream of claim 1, wherein the PMT further comprises a subtitle descriptor which includes a plurality of subtitle information sets, each subtitle information set specifying a language code and a type of a subtitle.

4. The DTV data stream of claim 3, wherein the subtitle descriptor is included in a second descriptor loop of the PMT.

5. The DTV data stream of claim 1, wherein each subtitle scale information descriptor comprises:
a language code identifying a language of a corresponding subtitle stream; and
scale information representing a ratio of a subtitle size of the corresponding subtitle stream to a reference subtitle size.

6. The DTV data stream of claim 5, wherein the scale information includes numerator and denominator values representing the size ratio.

7. The DTV data stream of claim 5, wherein the size ratio is any one of 0.5, 1, and 1.5.

8. A digital broadcast system, comprising:
a broadcast transmitter generating a digital television (DTV) data stream, the DTV data stream containing a plurality of subtitle streams having different subtitle sizes and a program map table (PMT) associated with the subtitle streams, the PMT comprising a subtitle scale information descriptor which includes a plurality of subtitle scale information sets specifying a plurality of subtitle sizes of the subtitle streams, respectively; and
a DTV receiver parsing the subtitle scale information descriptor and displaying a menu which indicates the subtitle sizes specified in the subtitle scale information descriptor.

9. The digital broadcast system of claim 8, wherein the plurality of subtitle sizes indicated in the menu are selectable by a user.

10. The digital broadcast system of claim 8, wherein the subtitle scale information descriptor is included in a second descriptor loop of the PMT.

11. The digital broadcast system of claim 8, wherein the PMT further comprises a subtitle descriptor which includes a plurality of subtitle information sets, each subtitle information set specifying a language code and a type of a subtitle stream.

12. The digital broadcast system of claim 11, wherein the subtitle descriptor is included in a second descriptor loop of the PMT.

13. The digital broadcast system of claim 8, wherein each subtitle scale information descriptor comprises:
a language code identifying a language of a corresponding subtitle stream; and
scale information representing a ratio of a subtitle size of the corresponding subtitle stream to a reference subtitle size.

14. The digital broadcast system of claim 13, wherein the scale information includes numerator and denominator values representing the size ratio.

15. The digital broadcast system of claim 13, wherein the size ratio is any one of 0.5, 1, and 1.5.

16. The digital broadcast system of claim 8, wherein the DTV receiver filters and decodes one of the subtitle streams in accordance with a subtitle size selected by a user from the menu.

17. The digital broadcast system of claim 8, wherein the DTV receiver comprises:
a filter filtering one of the subtitle streams in accordance with a subtitle size selected by a user from the menu;
a buffer storing the subtitle stream filtered by the filter; and
a decoder decoding the subtitle stream stored in the buffer.

18. A method of generating a digital television (DTV) data stream, the method comprising:
generating a plurality of subtitle streams having different subtitle sizes; and
generating a program map table (PMT) associated with the subtitle streams, the PMT comprising a subtitle scale information descriptor which includes a plurality of subtitle scale information sets specifying a plurality of subtitle sizes of the subtitle streams, respectively.

19. The method of claim 18, wherein the subtitle scale information descriptor is included in a second descriptor loop of the PMT.

20. The method of claim 18, wherein the PMT further comprises a subtitle descriptor which includes a plurality of subtitle information sets, each subtitle information set specifying a language code and a type of a subtitle.

21. The method of claim 18, wherein each subtitle scale information descriptor comprises:
a language code identifying a language of a corresponding subtitle stream; and
scale information representing a ratio of a subtitle size of the corresponding subtitle stream to a reference subtitle size.

22. The method of claim 21, wherein the scale information includes numerator and denominator values representing the size ratio.

23. A method of processing a digital television (DTV) data stream in a DTV receiver, the method comprising:
receiving a DTV data stream containing a plurality of subtitle streams having different subtitle sizes and a program map table (PMT) associated with the subtitle streams; and
parsing the PMT from the DTV data stream, the parsed PMT comprising a subtitle scale information descriptor which includes a plurality of subtitle scale information sets specifying the subtitle sizes of the subtitle streams.

24. The method of claim 23, further comprising displaying a menu which indicates the subtitle sizes which are selectable by a user.

25. The method of claim 24, further comprising filtering and decoding one of the subtitle streams in accordance with a subtitle size selected by the user from the menu.
